# EUROPEAN PATENT SPECIFICATION

(11) **EP 3 837 528 B1**
(45) Date of publication and mention of the grant of the patent: **17.09.2025**
(21) Application number: 19850216.3
(22) Date of filing: 30.07.2019
(51) Int. Cl.: G01N 15/14, G01N 15/10

(54) **FLOWRATE AND VACUUM CONTROLLED FLUID MANAGEMENT SYSTEM FOR A FLOW TYPE PARTICLE ANALYZER**
DURCHFLUSS- UND VAKUUMGESTEUERTES FLUIDVERWALTUNGSSYSTEM FÜR EINEN PARTIKELANALYSATOR VOM DURCHFLUSSTYP
SYSTÈME DE GESTION DE FLUIDE COMMANDÉ PAR DÉBIT ET PAR VIDE DESTINÉ À UN ANALYSEUR DE PARTICULES DE TYPE À ÉCOULEMENT

(30) Priority: 15.08.2018 US 201862764844 P
(43) Date of publication of application: 23.06.2021
(73) Proprietor: Becton, Dickinson and Company, Franklin Lakes, New Jersey 07417 (US)
(72) Inventor: GHAZI, Christopher, San Jose, California 95125 (US)
(74) Representative: Bals & Vogel Patentanwälte PartGmbB
(86) International application number: PCT/US2019/044201
(87) International publication number: WO 2020/036730

(56) References cited:
- WO-A1-2012/067767
- KR-A- 20030 032 828
- US-A1- 2007 224 684
- US-A1- 2012 103 112
- US-A1- 2015 153 263
- US-A1- 2016 266 025
- US-A1- 2016 377 524
- US-A1- 2018 156 710
- US-B2- 8 528 427

## Description

### INTRODUCTION

Flow-type particle analyzers, such as flow cytometers, are analytical tools that enable the characterization of particles in a fluid stream on the basis of optical parameters such as light scatter and fluorescence. The fluid stream may contain particles such as molecules, analyte-bound beads, or individual cells in a fluid suspension. The particles are passed by one or more detectors in which the particles are exposed to an excitation light, typically from one or more lasers, and the light scattering and fluorescence properties of the particles are measured. Each particle, or subcomponents thereof, may be labeled with a multiplicity of spectrally distinct fluorescent dyes. Typically, detection or characterization is carried out using a multiplicity of photodetectors, one for each distinct dye to be detected. The analysis is carried out while the fluid stream is passing through a channel in an optical cuvette, as is typically used in an analyzing flow cytometer.

In a typical flow cytometer, the particle-containing sample fluid is surrounded by a particle-free sheath fluid that forms an annular flow coaxial with the sample fluid as is passes through the detection region, thereby creating a hydrodynamically focused flow of particle-containing sample fluid in the center of the fluid stream, surrounded by particle-free sheath fluid. Typically, the ratio of sheath fluid to sample fluid is high, with the sample fluid forming only a small fraction of the total fluid flow through the detection region

US 2018/0156710 A1, US 2016/0266025 A1, US 2007/0224684 A1 and WO 2012/067767 A1 disclose known fluid management systems for flow type particle analyzers.

### SUMMARY

Flow rate and vacuum controlled fluid management systems for flow type particle analyzers, such as flow cytometers, are provided. Aspects of the fluid management systems include a pump modulated sheath fluid subsystem and a vacuum modulated waste fluid subsystem. Also provided are methods of using flow type particle analyzers having fluid management systems of the invention, e.g., in particle analysis applications.

### BRIEF DESCRIPTION OF THE DRAWINGS

The invention may be best understood from the following detailed description when read in conjunction with the accompanying drawings. Included in the drawings are the following figures:
**FIG. 1**provides a schematic of the principle of operation of a fluid management system in accordance with an embodiment of the invention.
**FIG. 2** provides a schematic of a fluid management system of a flow cytometer according to an embodiment of the invention.

### DETAILED DESCRIPTION

Flow rate and vacuum controlled fluid management systems for flow type particle analyzers, such as flow cytometers, are provided. Aspects of the fluid management systems include a pump modulated sheath fluid subsystem and a vacuum modulated waste fluid subsystem. Also provided are methods of using flow type particle analyzers having fluid management systems of the invention, e.g., in particle analysis applications.

Before the present invention is described in greater detail, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

The citation of any publication is for its disclosure prior to the filing date and should not be construed as an admission that the present invention is not entitled to antedate such publication by virtue of prior invention. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope of the present invention. Any recited method can be carried out in the order of events recited or in any other order which is logically possible.

In further describing various aspects of the invention, the flowrate and vacuum controlled fluid management systems and flow particle analyzers, e.g., flow cytometers, including the same are reviewed first in greater detail. Next, a review of methods of using the flow particle analyzers is provided.

### FLOWRATE AND VACUUM CONTROLLED FLUID MANAGEMENT SYSTEMS AND FLOW PARTICLE ANALYZERS INCLUDING THE SAME

As summarized above, flow rate and vacuum controlled fluid management systems for flow type particle analyzers, such as flow cytometers, are provided. Fluid management systems of the invention are configured to manage fluid flow, such as sheath fluid, sample fluid and waste fluid flow, in a flow type particle analyzer, e.g., as described below. As such, the fluid management systems may be employed to control how fluids, such as sheath fluid, sample fluid and waste fluid, flow through fluid flow pathways of a flow type particle analyzer. Specifically, the fluid management systems of the invention may be configured to control sample, sheath and waste fluid flow rates through a fluidic system of a flow type particle analyzer.

Flow type particle analyzers, such as flow cytometers, typically include a sample reservoir for receiving a fluid sample, such as a blood sample, and a sheath reservoir containing a sheath fluid. The flow type particle analyzer transports the particles (such as cells) in the fluid sample as a particulate stream to a flow cell, while also directing the sheath fluid into a flow cell via a flow cell input. Within the flow cell, a liquid sheath is formed around the particulate stream to impart a substantially uniform velocity on the particulate stream. The flow cell hydrodynamically focuses the particles, e.g., cells, within the stream to pass through the center of a light source in an interrogation region of the flow cell. Light from the interrogation region, e.g., in the form of scattered light (such as side scattered or forward scattered light) as well emitted fluorescent light, is then detected by a suitable optical detection system, e.g., for use in subsequent particle analyses. Fluid leaving the output of the flow enters a waste fluid management system, which conveys fluid from the output of the flow cell to a waste reservoir.

The fluid management systems of the invention are flowrate and vacuum controlled fluid management systems. By "flow rate and vacuum controlled" is meant that the fluid management system is configured to control sample flow rate in the system by a coupled operation of a pump modulated sheath fluid subsystem and a vacuum modulated waste fluid subsystem includes both a sheath fluid flow rate modulating pump and a vacuum imparting device to control fluid flow through the fluid system of the flow type particle analyzer. In some instances, sample flow is solely controlled by coupled operation of the pump modulated sheath fluid subsystem and the vacuum modulated waste fluid subsystem, such that sample flow through the system is not directly controlled.

In some instances, the fluid management systems are configured to have a constant fluid resistance during operation. As such, when in use, the fluid resistance in the system does not vary. As the fluid management systems are configured to have a constant fluid resistance during operation, when in use they are closed systems. As they are closed systems during use, the fluidic lines and reservoirs or other components do not have internal areas that are exposed to the external environment. Closed systems may be characterized in that no internal space or location of the system is exposed to the external environment of the system. As such, a change in pressure in one part of the system impacts fluid flow through another part of the system.

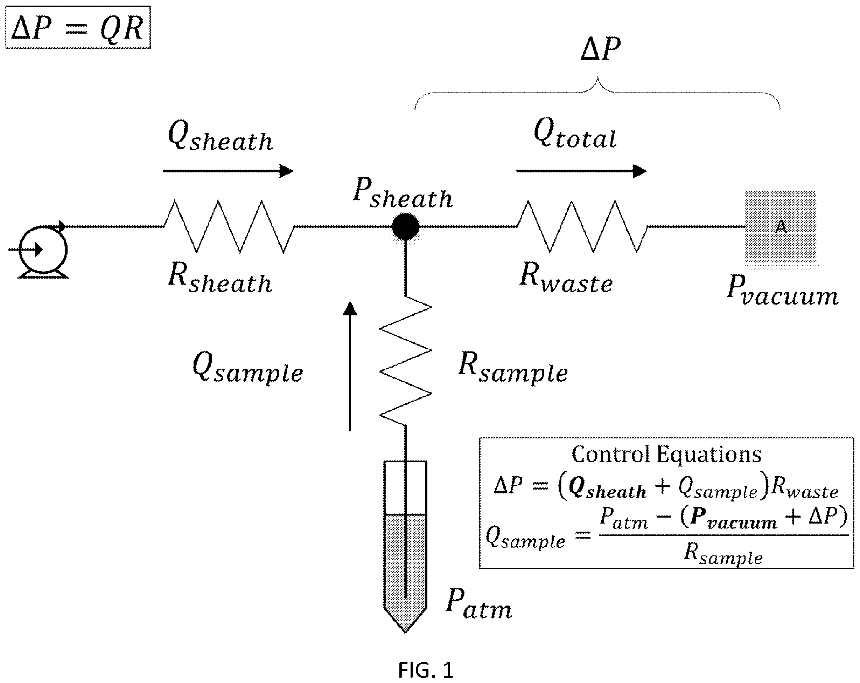

FIG. 1 shows a schematic of the operating principles of fluid management systems according to embodiments of the invention. In FIG. 1, the sheath and sample pathways are modeled as two resistors in parallel, combining to travel through the flow cell, cuvette, and waste path which collevtively are a third fluid resistor. The operation of the system is based upon the fluid circuit principle, where the pressure drop (delta P) across a closed fluid pathway is assumed equal to the product of liquid flowrate (Q) and fluid resistance (R). The sheath and sample pathways can be modeled as two resistors in parallel, combining to travel through the flow cell, cuvette, and waste path which are a third fluid resistor.

Control of sheath flowrate (Q_sheath) and vacuum pressure (P_vacuum) can be used to control sample flowrate. With constant sample line resistance (R_sample) and waste pressure drop (delta P), vacuum pressure (P_vacuum) is used to set sample flowrate (Q_sample). The sheath pump is simultaneously controlled to maintain constant pressure drop across the flowcell, cuvette, and waste path. To change sheath flowrates, and thus particle velocities in the cuvette, the sheath supply pump can be controlled to change pressure drop to a new value, with the control of the vacuum pump adjusted accordingly.

As reviewed above, aspects of the fluid management systems include a pump modulated sheath fluid subsystem and a vacuum modulated waste fluid subsystem. Each of these subsystems is now reviewed further in greater detail.

### Pump Modulated Sheath Fluid Subsystem

Aspects of the fluid management systems include a pump modulated sheath fluid subsystem for supplying sheath fluid to the flow cell and for providing the sheath fluid flow rate through the flow cell. The pump modulated sheath fluid subsystem may be configured to generate the sheath fluid flow rate by pumping sheath fluid from a sheath fluid source to the input of the flow cell. The pump modulated sheath fluid subsystem may include a sheath fluid source, a pump (e.g., positive displacement pump), a degassing device, a pulsation damper, and a sheath supply valve. The pressure in the pump modulated sheath fluid subsystem may be measured by a sheath fluid subsystem pressure transducer.

The pump modulated sheath fluid subsystems of the fluid management systems include a pump that modulates liquid flow through the sheath fluid portion of the fluidic system of the flow type particle analyzer. The sheath fluid pump may pump sheath fluid from a sheath fluid source to the input of a flow cell. The sheath fluid flow rate provided by the sheath fluid pump may vary, and in some instances ranges from 1 to 30 ml/min, such as 2 to 20 ml/min. In the broadest sense, the pump may be any device that moves liquids by mechanical action. The pump mediated sheath fluid subsystem may include any suitable pump, such as a positive displacement pump. As used herein, a "positive displacement pump" refers to pumps that move fluid by trapping a fixed amount and forcing (displacing) that trapped volume out of the device, where such pumps may operate with a series of working cycles, each cycle trapping a certain volume of fluid and moving the fluid mechanically through the pump and into a fluidic system. Positive displacement pumps of that may be employed include, but are not limited to: rotary-type positive displacement pumps, such as peristaltic pumps, internal gear pumps, screw pumps, shuttle block pumps, flexible vane or sliding vane pumps, circumferential piston pumps, flexible impeller pumps, helical twisted roots pumps or liquid-ring pumps; reciprocating-type positive displacement pumps, such as piston pumps, plunger pumps or diaphragm pumps; and linear-type positive displacement pumps, such as rope pumps and chain pumps. In some instances, the sheath fluid subsystem pump is modulated by a peristaltic pump.

In addition to the sheath fluid pump, the pump modulated sheath fluid subsystems may further include a pulsation damper positioned downstream of the pump, i.e., between the pump output and the flow cell input. As used herein, a "pulsation damper" refers to a device configured to attenuate fluidic pulsations within the pump mediated sheath fluid subsystem. A given pulsation damper may function to attenuate pulsations within the sheath fluid subsystem, e.g., by temporarily expanding/contracting to thereby accumulate/release the sheath fluid and attenuate pulsations within the sheath fluid. The pulsation attenuator may include a fluidic channel, a first fluidic device adapted to attenuate pulsations, and a second fluidic device adapted to attenuate pulsations. The first fluidic device may include a first fluidic resistor and a first fluidic capacitor, and the second fluidic device may include a second fluidic resistor and a second fluidic capacitor. The first fluidic resistor and second fluidic resistor may be resistive channels. The first fluidic capacitor and second fluidic capacitor may include a membrane that expands and accumulates fluid and then contracts and reintroduces the accumulated fluid into the fluidic channel. In some cases, the pulsation attenuator may include a fluidic channel, a first fluidic device adapted to attenuate pulsations with a shallow roll off slope, and a second fluidic device adapted to attenuate pulsations with a shallow rolloff slope. The first fluidic device and the second fluidic device may be connected to the fluidic channel such that they cooperatively attenuate pulsations with a steep rolloff slope. The first fluidic device may include a first fluidic resistor and a first fluidic capacitor, and the second fluidic device may include a second fluidic resistor and a second fluidic capacitor. In certain embodiments, the pulsation attenuator is arranged, similar a second-order low-pass filter, in the following order: (1) first fluidic resistor, (2) first fluidic capacitor, (3) second fluidic resistor, and (4) second fluidic capacitor. Any convenient pulsation damper may be employed, such as but not limited to those described in U.S. Patent Nos. 7,328,722; 7,857,005; 8,017,402; and 8,715,573.

In certain embodiments, the pump modulated sheath fluid subsystem includes a degassing device. As used herein, a "degassing device" refers to a device for removing gas bubbles out of a fluid stream. The degassing device may be positioned on a flow line in a location downstream of the pump and may receive sheath fluid from the pump. In some instances, a degassing device is present between the output of the pump and the input of the pulsation damper. Degassing devices of interest that may be incorporated in the pump mediated sheath fluid subsystem include, but are not limited to, a bubble filter, etc.

In certain embodiments, the pump modulated sheath fluid subsystem includes at least one valve. The at least one valve may be a sheath supply valve that facilitates the control of the flow of sheath fluid. In some cases, the sheath supply valve restricts fluid flow in the pump mediated sheath fluid subsystem and allows for a variable flow rate of the sheath fluid. The sheath supply valve may be positioned between the pump and the flow cell. In some cases, the sheath supply valve is positioned between the pulsation damper and the input of the flow cell. In some cases, the positive displacement pump sheath fluid subsystem includes a plurality of valves. Suitable valves for use in the positive displacement pump sheath fluid subsystem include, but are not limited to, check valves, and the like.

The pump modulated sheath fluid subsystem may further include a sheath fluid subsystem pressure transducer. The sheath fluid subsystem pressure transducer may be any device configured to measure the pressure in the sheath fluid subsystem at any suitable location along the flow line through which sheath fluid is pumped. In some cases, the sheath fluid subsystem pressure transducer is positioned at a location immediately before the flow cell and is configured to measure and provide output data representing sheath fluid pressure immediately before the flow cell. The sheath fluid subsystem pressure transducer may further be connected to a controller that adjusts the flow rate of the sheath fluid or sample fluid based on the pressure measured by the sheath fluid subsystem pressure transducer. The sheath fluid subsystem pressure transducer may be any suitable pressure monitoring device, i.e., pressure sensor, such as, but not limited to, force collector type pressure sensors, such as piezoresistive strain gauges, capacitive sensors, electromagnetic sensors, piezoelectric sensors, strain-gauge sensors, optical sensors, potentiometric sensors, and the like; as well as other types of pressures sensors, e.g., resonant sensors, thermal sensors, ionization sensors, and the like. In some cases, the pump mediated sheath fluid subsystem includes a plurality of sheath fluid subsystem pressure transducers coupled to the flow line through which sheath fluid is pumped and each sheath fluid subsystem pressure transducer may be connected to a controller for adjusting the flow rate of the sheath fluid or sample fluid based on the measured pressure.

In certain embodiments, the pump modulated sheath fluid subsystem may be fluidically coupled to a sheath fluid supply source, such that the sheath fluid supply source supplies sheath fluid to the input of the pump mediated sheath fluid subsystem. The sheath supply source may be any suitable reservoir or container for holding sheath fluid.

### Vacuum Modulated Waste Fluid Subsystem

Aspects of the fluid management systems include a vacuum modulated waste fluid subsystem. The vacuum modulated waste fluid subsystem may be configured to generate a waste fluid flow rate by drawing waste fluid from the output of the flow cell to a waste reservoir via application of a vacuum. The waste fluid may include the sample fluid and the sheath fluid that has been passed through the flow cell of the flow particle analyzer and out the flow cell output.

The vacuum modulated waste fluid subsystem includes a vacuum imparting device positioned along the waste fluid line between the flow cell output and a fluidic waste storage. The vacuum imparting device may vary as desired, and in some instances includes a vacuum pump operatively coupled to a vacuum accumulator, where the vacuum accumulator may be positioned between the pump and the flow cell output along the waste fluid subsystem. The vacuum pump component of the vacuum imparting device may vary, as desired. In some instances, the vacuum pump is a positive displacement pump. Positive displacement vacuum pumps that may be employed include, but are not limited to: rotary vane pumps, diaphragm pumps, piston pumps, scroll pumps, screw pumps, gear pumps, peristaltic pumps, etc. In some instances, the vacuum pump is a diaphragm pump. In some instance, the vacuum pump is not the same as the pump of the pump modulated sheath fluid subsystem. In some instances, the vacuum pump is a diaphragm pump and the sheath fluid subsystem pump is a peristaltic pump.

Operatively coupled to the pump is a vacuum accumulator. As used herein, the "vacuum accumulator" refers to a sealed container with an internal volume may times the stroke volume of the pump, where in some instances the internal volume of the container exceeds that of the stroke volume by 10% or more, such as 25% or more, including 50% or more, e.g., from 10 to 100%, such as 20 to 100%. The vacuum accumulator may maintain the vacuum level generated by the vacuum pump. In some cases, the absolute vacuum pressure in the vacuum accumulator dictates the sample fluid flow rate from the sample source through the sample input line and through the flow cell. In some cases, the pump and vacuum accumulator of the flow cytometer is the vacuum source and vacuum accumulator as described in U.S. Patent No. 8,528,427.

In certain embodiments, the vacuum modulated waste fluid subsystem includes at least one valve. The at least one valve may be a waste valve that may facilitate the control of the flow of waste fluid. In some cases, the waste valve restricts fluid flow in the vacuum modulated waste fluid subsystem and allows for a variable flow rate of the waste fluid. The waste valve may be positioned on the flow line of the vacuum pump waste fluid subsystem between the flow cell and the pump. In some cases, the waste valve is positioned on the flow line between the output of the flow cell and the vacuum accumulator. In some cases, the vacuum pump waste fluid subsystem includes a plurality of valves. Suitable valves for use in the vacuum pump waste fluid subsystem may vary, and include, but are not limited to, adjustable valves, and the like.

The vacuum modulated waste fluid subsystem may further include a waste fluid subsystem pressure transducer. The waste fluid subsystem pressure transducer may measure the vacuum pressure in the waste fluid subsystem. In some cases, the waste fluid subsystem pressure transducer is configured to measure vacuum pressure in the vacuum accumulator. The waste fluid subsystem pressure transducer may be connected to a controller that adjusts the flow rate of the waste fluid based on the measured vacuum pressure. The waste fluid subsystem pressure transducer may be any suitable pressure monitoring device, such as, but not limited to: pressure sensors, such as, but not limited to, force collector type pressure sensors, such as piezoresistive strain gauges, capacitive sensors, electromagnetic sensors, piezoelectric sensors, strain-gauge sensors, optical sensors, potentiometric sensors, and the like; as well as other types of pressures sensors, e.g., resonant sensors, thermal sensors, ionization sensors, and the like.. In some cases, the vacuum modulated sheath fluid subsystem includes a plurality of waste fluid subsystem pressure transducers. In some cases, the vacuum pump sheath fluid subsystem includes a plurality of vacuum fluid subsystem pressure transducers coupled to the flow line through which waste fluid is pumped and each waste fluid subsystem pressure transducer may be connected to a controller for adjusting the flow rate of the waste fluid based on the measured pressure.

In certain embodiments, the vacuum modulated waste fluid subsystem may be fluidically coupled to a waste reservoir, such as a container configured for storing waste fluid, such that the waste fluid flows from the output of the pump into the waste reservoir. The waste reservoir may be any suitable container for holding sheath fluid.

### Sample Source

In some cases, the flow type particle analyzer includes a sample source. The sample source may be any suitable reservoir or container for holding a sample fluid. The sample source may be fluidically coupled to the sample input line that leads to the flow cell and may supply the sample input line with sample fluid.

### Controller

Aspects of the fluid management systems further include a controller for modulating the flow rates of fluids in the flow cytometer. In some cases, the controller modulates the flow rate of sheath fluid from the sheath fluid source to the input of the flow cell. In certain embodiments, the controller modulates the flow rate of the sample fluid from the sample source to the input of the flow cell. In certain embodiments, the controller modulates the flow rate of the waste fluid from the output of the flow cell to the waste reservoir. The controller may adjust the flow rate of sheath fluid, sample fluid, and waste fluid based on the pressures measured by the pressure transducers of the system. In some cases, the controller adjusts the flow rate of the sheath fluid, sample fluid, and waste fluid based on the pressure measured immediately before the flow cell by the sheath fluid subsystem pressure transducer. In some cases, the controller adjusts the flow rate of the sheath fluid, sample fluid, and waste fluid based on the vacuum pressure measured in the vacuum accumulator by the waste fluid subsystem pressure transducer.

The controller may provide any suitable sample fluid flow rate through the flow cell. In some cases, the controller modulates the sample fluid flow rate based on the fluid pressure measured by the sheath fluid subsystem pressure transducer. In some cases, the controller modulates the sample fluid flow rate based on the vacuum pressure measured by the waste fluid subsystem pressure transducer. In some instances, the controller modulates the sample fluid flow rate based on the pressure differential between the pump modulated sheath fluid subsystem and the vacuum modulated waste fluid subsystem, as measured by the sheath fluid subsystem transducer and the waste fluid subsystem transducer. In some instances, the controller may be configured to provide a sample fluid flow rate that ranges from 1 to 1000 µl/min, such as 5 to 200 µl/min.

In some case, the controller modulates the sample fluid flow rate by coupled modulation or control of the sheath fluid flow rate and the vacuum pressure of the waste fluid subsystem. The controller may modulate the sheath fluid flow rate based on a measured pressure differential between the positive displacement pump sheath fluid subsystem and the vacuum pump waste fluid subsystem, as measured by the sheath fluid subsystem transducer and the waste fluid subsystem transducer. The controller may be configured to provide a sheath fluid flow rate that ranges from 1 to 30 ml/min, such as 2 to 20 ml/min.

In some cases, the controller is configured to control a control feedback circuit for regulating the fluid flow rates within the flow cytometer. In certain embodiments, the controller may be configured to control a sheath fluid subsystem control feedback circuit for regulating the pump modulated sheath fluid subsystem based on the measured pressure differential between the pump modulated sheath fluid subsystem and vacuum modulated waste fluid subsystem. In some cases, the controller controls a waste fluid subsystem control feedback circuit for regulating the vacuum modulated waste fluid subsystem based on the measured pressure differential between the pump modulated sheath fluid subsystem and the vacuum pump waste fluid subsystem.

### Flow Type Particle Analyzers

The fluid management systems described herein may be employed in a variety of different flow type particle analyzers. Suitable flow cytometry systems in which the subject fluid managements systems may be employed include, but are not limited to those described in U.S. Patent Nos. 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039. In certain instances, flow cytometry systems of interest include the BD Biosciences FACSCanto^{™} II flow cytometer, BD Accuri^{™} flow cytometer, BD Biosciences FACSCelesta^{™} flow cytometer, BD Biosciences FACSLyricTM flow cytomter, BD Biosciences FACSVerse^{™} flow cytometer, BD Biosciences FACSymphony^{™} flow cytometer BD Biosciences LSRFortessa^{™} flow cytometer, BD Biosciences LSRFortess^{™} X-20 flow cytometer and the like.

In certain embodiments, the subject systems are flow cytometric systems having an excitation module that uses radio-frequency multiplexed excitation to generate a plurality of frequency shifted beams of light. In these embodiments, the laser light generator may include a plurality of lasers and one or more acousto-optic components (e.g., an acoustooptic deflector, an acoustooptic frequency shifter) to generate a plurality of frequency shifted comb beams. One or more of the frequency shifted comb beams and local oscillator beams may be configured to be received by a beam shaping component as described here to produce one or more beams of frequency shifted light having a substantially constant intensity profile. In certain instances, the subject systems are flow cytometric systems having a laser excitation module as described in U.S. Patent Nos. 9,423,353 and 9,784,661 and U.S. Patent Publication Nos. 2017/0133857 and 2017/0350803.

### Specific Embodiments

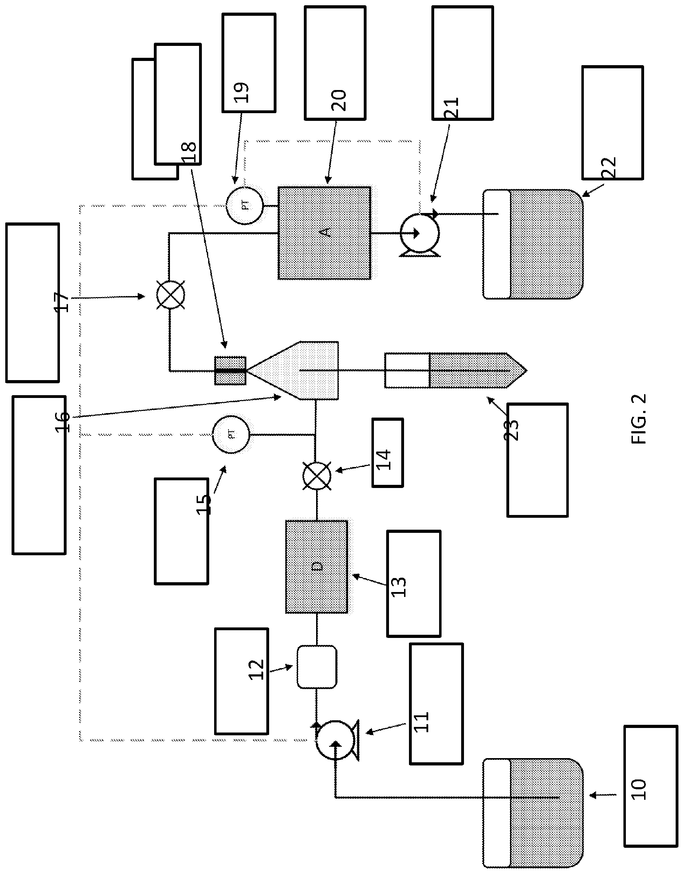

FIG. 2 shows a schematic of a fluid management system of a flow cytometer, according to one embodiment of the invention. In the sheath fluid subsystem of the fluid management system, sheath fluid is pumped from a sheath fluid source to the hydrodynamic focusing channel. The sheath fluid combines with sample fluid to be optically analyzed in the imaging flow channel. A sheath fluid supply tank **10** containing sheath fluid is coupled to a flow line that supplies a sheath supply peristaltic pump **11** with sheath fluid. Using a pump to control sheath flowrate allows for head pressure independent flow control and for the continuous variation of sheath fluid and sample flow rates. The sheath fluid passes through the flow line of the sheath fluid subsystem and flows through a degassing device **12** (e.g., a bubble filter) for removing bubbles in the fluid stream and a pulsation damper **13** for attenuating pulsations in the fluidic subsystem. The fluid line includes a sheath supply valve **14** for restricting fluid flow that is positioned before the flow cell, which includes a hydrodynamic focusing channel **16** and imaging flow channel **18.** The pressure within the flow cytometer before the flow cell is measured by a sheath fluid subsystem pressure transducer **15.**

The system further includes a sample input **23** containing sample fluid. The sample input supplies sample fluid to a fluid line leading to the flow cell including the hydrodynamic focusing channel **16** and imaging flow channel **18.** The sample fluid combines with the sheath fluid pumped by the sheath supply peristaltic pump **11** and the two fluids flow through the input of the flow cell.

In the waste fluid subsystem of the fluidic system, waste fluid including sample fluid and sheath fluid is drawn from the output of the flow cell and to a waste storage tank. Given correct control of the sheath flow rate by the sheath supply peristaltic pump **11,** the sample fluid is drawn through the flow cell by the vacuum created by the drawing of waste fluid by diaphragm pump **21.** After waste fluid passes through the output of the flow cell, the waste fluid is drawn through a flow line by diaphragm pump **21** to waste storage tank **22.** The diaphragm pump further generates a vacuum in a vacuum accumulator **20** for imparting a vacuum to the waste fluid line of the waste fluid subsystem. The vacuum accumulator may be a small sealed plastic bottle. A second pressure transducer **19** is connected to the vacuum accumulator **20** for measuring the pressure within the vacuum accumulator. The waste fluid subsystem further includes a waste valve positioned on the flow line between the output of the imaging flow channel **18** and the vacuum accumulator **20.** For a given sample flowrate, an associated vacuum accumulator vacuum pressure is controlled to match the fluid resistance of the sample line via the vacuum pump **21.** In turn, the pressure drop across the flow cell, defined as the difference in pressures measured from the first and second transducers, is used as feedback control of the sheath supply pump 11 for the proper sheath flowrate.

### METHODS

Also provided are methods of using a flow type particle analyzer that includes a fluid management system of the invention, e.g., as described above. The methods may include flowing a sample fluid through a flow cytometer including: a flow cell comprising an input and output, a pump modulated sheath fluid subsystem for fluidically coupling a sheath fluid source to the input, and a vacuum modulated waste fluid subsystem for fluidically coupling a waste reservoir to the output, e.g., as described in detail above.

In some embodiments, the sample fluid contains an initial sample that is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class mammalia, including the orders carnivore (e.g., dogs and cats), rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present invention may be applied to samples from a human subject, it is to be understood that the methods may also be carried-out on samples from other animal subjects (that is, in "non-human subjects") such as, but not limited to, birds, mice, rats, dogs, cats, livestock and horses.

In practicing the subject methods, an amount of sample fluid is pumped into the flow cytometer. The amount of sample fluid pumped into the flow cytometer may vary, e.g., ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

The method further includes modulating sample fluid flow rate based on a measured pressure differential between the pump modulated sheath fluid subsystem and the vacuum modulated waste fluid subsystem, as measured by a sheath fluid subsystem transducer and a waste fluid subsystem transducer, e.g., as described in detail above. The sample fluid flow rate may be adjusted by a controller connected to the sheath fluid subsystem transducer and the waste fluid subsystem transducer. The controller may receive a signal from each of the transducers providing the pressures in the fluidic subsystems of the flow cytometer before and after the flow cell. The controller may be in communication with the pump of the pump modulated sheath fluid subsystem and the pump of the vacuum modulated waste fluid subsystem and may control the sample fluid flow rate by controlling the action of the pumps.

### COMPUTER CONTROLLED SYSTEMS

Aspects of the present disclosure further include computer controlled systems for practicing the subject methods, where the systems further include one or more computers for complete automation or partial automation of a system for practicing methods described herein. In some embodiments, systems include a computer having a computer readable storage medium with a computer program stored thereon, where the computer program when loaded on the computer includes instructions for operating a fluid management system, e.g., as described above.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, C++, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. The processor may be any suitable analog or digital system. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, a removable hard disk drive, or a diskette drive. Such types of memory storage devices typically read from, and/or write to, a program storage medium (not shown) such as, respectively, flash memory, an SD card, solid state hard drives, or other form of optical or magnetic memory devices. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid state storage devices (including magnetic or optical disks or tape or RAM, or any other suitable device, either fixed or portable). The processor may include a general purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the invention also include programming, e.g., in the form of computer program products, algorithms for use in practicing the methods as described above. Programming according to the present invention can be recorded on computer readable media, e.g., any medium that can be read and accessed directly by a computer. Such media include, but are not limited to: magnetic storage media, hard disc storage medium; optical storage media such as DVDs, Blu-Ray, CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a a computer connected to a Wide Area Network ("WAN"), telephone network, satellite network, or any other suitable communication channel, including a smartphone.

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), WiFi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, lightning ports, USB-C ports, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or WiFi connection to the internet at a WiFi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, tablet computer or notebook computer; or a larger device such as a desktop computer, appliance, etc. In some embodiments, the server device has a display, such as a liquid crystal display (LCD) or light emitting diode display (LED), as well as an input device, such as buttons, a keyboard, mouse or a touch-screen.

In some embodiments, the communication interface is configured to automatically or semiautomatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a work station, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows 10, iOS, Sun Solaris, Linux, OS/400, Compaq Tru64 Unix, SGI IRIX, Siemens Reliant Unix, Ubuntu, Zorin OS and others.

### UTILITY

The fluidic subsystems and methods as described herein find use in a variety of applications where it is desirable to analyze particle components in a sample in a fluid medium, such as a biological sample. The fluidic subsystems may be incorporated in any suitable analyzing flow cytometer system. Embodiments of the invention allow for continuously varying control of both sheath and sample flow rates in a flow cytometer while maintaining the stability of sheath and sample flow rates. The continuous variation of both sheath and sample flow rates is provided by the use of a positive displacement pump for pumping sheath fluid and a vacuum pump for generating vacuum pressure within the flow cytometer.

Flow cytometry systems and methods for analyzing samples in which the subject fluid management systems find use include, but are not limited to those described in U.S. Patent Nos. 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039. In certain instances, flow cytometry systems of interest include the BD Biosciences FACSCanto^{™} II flow cytometer, BD Accuri^{™} flow cytometer, BD Biosciences FACSCelesta^{™} flow cytometer, BD Biosciences FACSLyric^{™} flow cytomter, BD Biosciences FACSVerse^{™} flow cytometer, BD Biosciences FACSymphony^{™} flow cytometer BD Biosciences LSRFortessa^{™} flow cytometer, BD Biosciences LSRFortess^{™} X-20 flow cytometer and the like.

In certain embodiments, the subject systems are flow cytometric systems having an excitation module that uses radio-frequency multiplexed excitation to generate a plurality of frequency shifted beams of light. In these embodiments, the laser light generator may include a plurality of lasers and one or more acousto-optic components (e.g., an acoustooptic deflector, an acoustooptic frequency shifter) to generate a plurality of frequency shifted comb beams. One or more of the frequency shifted comb beams and local oscillator beams may be configured to be received by a beam shaping component as described here to produce one or more beams of frequency shifted light having a substantially constant intensity profile. In certain instances, the subject systems are flow cytometric systems having a laser excitation module as described in U.S. Patent Nos. 9,423,353 and 9,784,661 and U.S. Patent Publication Nos. 2017/0133857 and 2017/0350803.

In at least some of the previously described embodiments, one or more elements used in an embodiment can interchangeably be used in another embodiment unless such a replacement is not technically feasible. It will be appreciated by those skilled in the art that various other omissions, additions and modifications may be made to the methods and structures described above without departing from the scope of the claimed subject matter. All such modifications and changes are intended to fall within the scope of the subject matter, as defined by the appended claims.

It will be understood by those within the art that, in general, terms used herein, and especially in the appended claims (*e.g.,* bodies of the appended claims) are generally intended as "open" terms (*e.g.,* the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (*e.g.,* "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (*e.g*., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (*e.g*., " a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible sub-ranges and combinations of sub-ranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like include the number recited and refer to ranges which can be subsequently broken down into sub-ranges as discussed above. Finally, as will be understood by one skilled in the art, a range includes each individual member. Thus, for example, a group having 1-3 articles refers to groups having 1, 2, or 3 articles. Similarly, a group having 1-5 articles refers to groups having 1, 2, 3, 4, or 5 articles, and so forth.

Although the foregoing invention has been described in some detail by way of illustration and example for purposes of clarity of understanding, it is readily apparent to those of ordinary skill in the art in light of the teachings of this invention that certain changes and modifications may be made thereto without departing from the scope of the appended claims.

Accordingly, the preceding merely illustrates the principles of the invention. It will be appreciated that those skilled in the art will be able to devise various arrangements which, although not explicitly described or shown herein, embody the principles of the invention and are included within its scope. Furthermore, all examples and conditional language recited herein are principally intended to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention as well as specific examples thereof, are intended to encompass both structural and functional equivalents thereof. Additionally, it is intended that such equivalents include both currently known equivalents and equivalents developed in the future, i.e., any elements developed that perform the same function, regardless of structure.

The scope of the present invention, therefore, is not intended to be limited to the exemplary embodiments shown and described herein. Rather, the scope of present invention is embodied by the appended claims.

## Claims

1. A fluid management system for a flow type particle analyzer, the fluid management system comprising:
a flow cell (18) comprising an input and output;
a sample input (23) line for fluidically coupling a sample source (23) to the input;
a pump modulated sheath fluid subsystem for fluidically coupling a sheath fluid source to the input, comprising a sheath supply peristaltic pump (11);
a vacuum modulated waste fluid subsystem for fluidically coupling a waste reservoir to the output, wherein the vacuum modulated waste fluid subsystem comprises a vacuum pump (21) operatively coupled to a vacuum accumulator (20); and
a controller
wherein the fluid management system is configured to:
have a constant fluid resistance coupling during operation;
with the controller, control sample flow rate through the flow cell (18) by a coupled operation of the pump modulated sheath fluid subsystem and the vacuum modulated waste fluid subsystem; and
with the controller, modulate the sheath fluid flow rate based on a measured pressure differential between the pump modulated sheath fluid subsystem and the vacuum modulated waste fluid subsystem as measured by a sheath fluid subsystem transducer (15) and a waste fluid subsystem transducer (19) connected to the vacuum accumulator (20) for measuring the pressure within the vacuum accumulator,
wherein the system is configured such that, for a given sample flowrate, an associated vacuum accumulator vacuum pressure is controlled to match the fluid resistance of the sample input line (23) via the vacuum pump (21) and in turn, the pressure drop across the flow cell, defined as the difference in pressures measured from the sheath fluid subsystem transducer (15) and a waste fluid subsystem transducer (19) is used as feedback control of the sheath supply peristaltic pump (11) for the proper sheath flowrate.

2. The fluid management system according to claim 1, wherein the flow type particle analyzer is a flow cytometer.

3. The fluid management system according to any of the preceding claims, wherein the sample input (23) line is fluidically coupled to a sample source, the pump modulated sheath fluid subsystem is fluidically coupled to a sheath fluid source and the vacuum modulated waste fluid subsystem is fluidically coupled to a waste reservoir.

4. The fluid management system Claim 3, wherein the pump modulated sheath fluid subsystem is configured to generate a sheath fluid flow rate by pumping the sheath fluid from the sheath fluid source to the input of the flow cell.

5. The fluid management system according to any of the preceding claims, wherein the pump modulated sheath fluid subsystem comprises a degassing device (12).

6. The fluid management system according to any of the preceding claims, wherein the pump modulated sheath fluid subsystem comprises a pulsation damper (13) configured to attenuate fluidic pulsations within the pump modulated sheath fluid subsystem.

7. The fluid management system according to any one of claims 1-6, wherein the vacuum accumulator is configured to maintain a vacuum pressure generated by the vacuum pump.

8. A flow type particle analyzer comprising a fluid management system according to any of the preceding claims, preferably wherein the flow type particle analyze is a flow cytometer.

9. A method of analyzing particles in a sample, the method comprising:
analyzing the particles in the sample using a flow type particle analyzer comprising a fluid management system according to any of claims 1-7.

10. The method according to Claim 9, wherein the flow type particle analyzer is a flow cytometer.

11. The method according to Claims 9 or 10, wherein the vacuum accumulator is configured to maintain a vacuum pressure generated by the vacuum pump.

## Patentansprüche

1. Fluidmanagementsystem für einen Durchfluss-Partikelanalysator, wobei das Fluidmanagementsystem umfasst:
eine Durchflusszelle (18) mit einem Eingang und einem Ausgang;
eine Probeneingangsleitung (23) zum fluidischen Koppeln einer Probenquelle (23) mit dem Eingang;
ein pumpenmoduliertes Mantelfluid-Subsystem zum fluidischen Koppeln einer Mantelfluidquelle mit dem Eingang, die eine Mantelversorgungs-Peristaltikpumpe (11) umfasst;
ein vakuummoduliertes Abfallfluid-Subsystem zum fluidischen Koppeln eines Abfallbehälters mit dem Ausgang, wobei das vakuummodulierte Abfallfluid-Subsystem eine Vakuumpumpe (21) umfasst, die funktionsfähig mit einem Vakuumakkumulator (20) gekoppelt ist; und
eine Steuerung
wobei das Fluidmanagementsystem so konfiguriert ist, dass:
es eine konstante Fluidwiderstandskopplung während des Betriebs;
eine mit der Steuerung geregeltn Probenflussrate durch die Durchflusszelle (18) durch einen gekoppelten
Betrieb des pumpenmodulierten Mantelfluid-Subsystems und des vakuummodulierten Abfallfluid-Subsystem; und
eine mit der Steuerung modulierte Mantelfluidkeitsdurchflussrate auf der Grundlage einer gemessenen Druckdifferenz zwischen dem pumpenmodulierten Mantelfluid-Subsystem und dem vakuummodulierten Abfallfluid-Subsystem zu, die von einem Mantelfluid-Subsystem-Wandler (15) und einem Abfallfluid-Subsystem-Wandler (19) gemessen wird, die mit dem Vakuumakkumulator (20) verbunden sind, um den Druck innerhalb des Vakuumakkumulators zu messen, aufweist,
wobei das System so konfiguriert ist, dass bei einer gegebenen Probenflussrate ein zugehöriger Vakuumakkumulatorunterdruck so geregelt wird, dass er über die Vakuumpumpe (21) dem Fluidwiderstand der Probeneingangsleitung (23) entspricht, und wiederum der Druckabfall über die Durchflusszelle, definiert als die Differenz der vom Mantelfluid-Subsystem-Wandler (15) und einem Abfallfluid-Subsystem-Wandler (19) gemessenen Drücke, als Rückkopplungssteuerung der Mantelversorgungs-Peristaltikpumpe (11) für die richtige Mantelflussrate verwendet wird.

2. Das Fluidmanagementsystem gemäß Anspruch 1, wobei der Durchfluss-Partikelanalysator ein Durchflusszytometer ist.

3. Das Fluidmanagementsystem gemäß einem der vorhergehenden Ansprüche, wobei die Probeneingangsleitung (23) fluidisch mit einer Probenquelle gekoppelt ist, das pumpenmodulierte Mantelfluid-Subsystem fluidisch mit einer Mantelfluidquelle gekoppelt ist und das vakuummodulierte Abfallfluid-Subsystem fluidisch mit einem Abfallbehälter gekoppelt ist.

4. Das Fluidmanagementsystem nach Anspruch 3, wobei das pumpenmodulierte Mantelfluid-Subsystem so konfiguriert ist, dass es eine Mantelfluid-Durchflussrate erzeugt, indem es das Mantelfluid aus der Mantelfluidquelle zum Eingang der Durchflusszelle pumpt.

5. Fluidmanagementsystem nach einem der vorhergehenden Ansprüche, wobei das pumpenmodulierte Mantelfluid-Subsystem eine Entgasungsvorrichtung (12) umfasst.

6. Fluidmanagementsystem nach einem der vorhergehenden Ansprüche, wobei das pumpenmodulierte Mantelfluid-Subsystem einen Pulsationsdämpfer (13) umfasst, der so konfiguriert ist, dass er Fluidpulsationen innerhalb des pumpenmodulierten Mantelfluid-Subsystems dämpft.

7. Fluidmanagementsystem nach einem der Ansprüche 1 bis 6, wobei der Vakuumakkumulator so konfiguriert ist, dass er einen von der Vakuumpumpe erzeugten Unterdruck aufrechterhält.

8. Ein Durchfluss-Partikelanalysator, der ein Fluidmanagementsystem gemäß einem der vorhergehenden Ansprüche umfasst, wobei der Durchfluss-Partikelanalysator vorzugsweise ein Durchflusszytometer ist.

9. Verfahren zum Analysieren von Partikeln in einer Probe, wobei das Verfahren umfasst:
Analysieren der Partikel in der Probe unter Verwendung eines Durchfluss-Partikelanalysators, der ein Fluidmanagementsystem gemäß einem der Ansprüche 1 bis 7 umfasst.

10. Verfahren gemäß Anspruch 9, wobei der Durchfluss-Partikelanalysator ein Durchflusszytometer ist.

11. Verfahren nach Anspruch 9 oder 10, wobei der Vakuumakkumulator so konfiguriert ist, dass er einen von der Vakuumpumpe erzeugten Unterdruck aufrechterhält.

## Revendications

1. Système de gestion de fluide pour un analyseur de particules de type à écoulement, le système de gestion de fluide comprenant:
une cellule d'écoulement (18) comprenant une entrée et une sortie;
une ligne d'entrée d'échantillon (23) pour coupler fluidiquement une source d'échantillon (23) à l'entrée;
un sous-système de fluide de gaine modulé par pompe pour coupler fluidiquement une source de fluide de gaine à l'entrée, comprenant une pompe péristaltique d'alimentation de gaine (11);
un sous-système de fluide résiduaire modulé sous vide pour coupler fluidiquement un réservoir de déchets à la sortie, dans lequel le sous-système de fluide résiduaire modulé sous vide comprend une pompe à vide (21) couplée de manière fonctionnelle à un accumulateur de vide (20); et
un contrôleur
dans lequel le système de gestion de fluide est configuré pour:
avoir un couplage à résistance fluidique constante pendant le fonctionnement;
avec le contrôleur, contrôler le débit d'échantillon à travers la cellule d'écoulement (18) par un fonctionnement couplé du sous-système de fluide de gaine modulé par pompe et du sous-système de fluide résiduaire modulé sous vide; et
avec le contrôleur, moduler le débit du fluide de gaine sur la base d'une différence de pression mesurée entre le sous-système de fluide de gaine modulé par pompe et le sous-système de fluide résiduaire modulé sous vide, telle que mesurée par un transducteur de sous-système de fluide de gaine (15) et un transducteur de sous-système de fluide résiduaire (19) connecté à l'accumulateur de vide (20) pour mesurer la pression à l'intérieur de l'accumulateur de vide,
dans lequel le système est configuré de telle sorte que, pour un débit d'échantillon donné, une pression de vide d'accumulateur de vide associé est contrôlée pour correspondre à la résistance fluidique de la ligne d'entrée d'échantillon (23) via la pompe à vide (21) et, à son tour, la chute de pression à travers la cellule d'écoulement, définie comme la différence de pressions mesurée par le transducteur de sous-système de fluide de gaine (15) et un transducteur de sous-système de fluide résiduaire (19) est utilisée comme contrôle de rétroaction de la pompe péristaltique d'alimentation de gaine (11) pour obtenir le débit de gaine approprié.

2. Système de gestion de fluide selon la revendication 1, dans lequel l'analyseur de particules de type à écoulement est un cytomètre de flux.

3. Système de gestion de fluide selon l'une quelconque des revendications précédentes, dans lequel la ligne d'entrée d'échantillon (23) est couplée fluidiquement à une source d'échantillon, le sous-système de fluide de gaine modulé par pompe est couplé fluidiquement à une source de fluide de gaine et le sous-système de fluide résiduaire modulé sous vide est couplé fluidiquement à un réservoir de déchets.

4. Système de gestion de fluide selon la revendication 3, dans lequel le sous-système de fluide de gaine modulé par pompe est configuré pour générer un débit de fluide de gaine en pompant le fluide de gaine depuis la source de fluide de gaine vers l'entrée de la cellule d'écoulement.

5. Système de gestion de fluide selon l'une quelconque des revendications précédentes, dans lequel le sous-système de fluide de gaine modulé par pompe comprend un dispositif de dégazage (12).

6. Système de gestion de fluide selon l'une quelconque des revendications précédentes, dans lequel le sous-système de fluide de gaine modulé par pompe comprend un amortisseur de pulsation (13) configuré pour atténuer les pulsations fluidiques à l'intérieur du sous-système de fluide de gaine modulé par pompe.

7. Système de gestion de fluide selon l'une quelconque des revendications 1 à 6, dans lequel l'accumulateur de vide est configuré pour maintenir une pression de vide générée par la pompe à vide.

8. Analyseur de particules de type à écoulement comprenant un système de gestion de fluide selon l'une quelconque des revendications précédentes, de préférence dans lequel l'analyse de particules de type à écoulement est un cytomètre de flux.

9. Procédé d'analyse de particules dans un échantillon, le procédé comprenant:
l'analyse des particules dans l'échantillon à l'aide d'un analyseur de particules de type à écoulement comprenant un système de gestion de fluide selon l'une quelconque des revendications 1 à 7.

10. Procédé selon la revendication 9,
dans lequel l'analyseur de particules de type à écoulement est un cytomètre de flux.

11. Procédé selon les revendications 9 ou 10,
dans lequel l'accumulateur de vide est configuré pour maintenir une pression de vide générée par la pompe à vide.
